# EUROPÄISCHE PATENTANMELDUNG

(11) **EP 4 548 753 A1**
(43) Veröffentlichungstag der Anmeldung: **07.05.2025**
(21) Anmeldenummer: 24203912.1
(22) Anmeldetag: 01.10.2024
(51) Int. Cl.: A01K 1/00, A01K 3/00

(54) **SICHERHEITSPANEL FÜR PFERDE MIT SCHIEBETOR**

(30) Priorität: 31.10.2023 DE 102023130153
(71) Anmelder: PATURA KG, 63925 Laudenbach (DE)
(72) Erfinder: ALLIÉ, Bernd, 63925 Laudenbach (DE)
(74) Vertreter: Herrmann, Uwe

(57) **Zusammenfassung**

Die vorliegende Erfindung betrifft ein Panel (1) für Pferde, mit einem vorzugsweise rechteckigen Rahmen (2) und einer Mehrzahl von in dem Rahmen angeordneten Querstreben (3), wobei in einem ersten Bereich des Panels der Abstand zwischen den einzelnen Querstreben maximal 5 cm beträgt und in einem zweiten Bereich des Panels der Abstand zwischen den einzelnen Querstreben mindestens ca. 30 cm beträgt und vorzugsweise im Bereich zwischen ca. 30 cm und ca. 80 cm liegt und das Panel ein Schiebetor, wobei die Abstände vorzugsweise kleiner als 5 cm bzw. größer als 30 cm im geöffneten und geschlossenem Zustand des Schiebetors sind. Weiterhin betrifft die Erfindung einen mobilen Paddock und eine Pferdebox mit mindestens einem derartigen Panel.

## Beschreibung

Die vorliegende Erfindung betrifft ein Panel gemäß dem Oberbegriff des Anspruchs 1.

Panels sind Elemente, z.B. aus geschweißten Stahlrohren, die in der Rinder- und Pferdehaltung insbesondere zur vorrübergehenden Abgrenzung der Tiere geeignet sind. Das äußerst geringe Gewicht, die gute Handlichkeit und trotzdem ausreichende Stabilität in Verbindung mit dem günstigen Preis sorgen für eine weite Verbreitung der Gitter. Als Folge werden Panels teilweise auch für eine stationäre Unterbringung von Tieren verwendet.

Grundsätzlich weisen Panels Gitter aus mehreren horizontalen Streben / Rohren auf, die in regelmäßigen Abständen übereinander angeordnet und mittels vertikaler Streben verschweißt sind.

Übliche Höhen eines Panels liegen zwischen ca. 1,35 m und 1,85 m. Gängige Abstände zwischen den Querstreben / Rohren liegen bei ca. 20 cm.

Speziell im Bereich der Unterbringung von Pferden sind diese Rohrabstände von ca. 20 cm als gefährlich anzusehen, da die Verwendung derartiger Panels schon mehrfach zu Unfällen und Verletzungen bei Pferden geführt hat.

Speziell beim Wälzen der Tiere in unmittelbare Nähe zu den Panels können die Tiere mit ihren Gliedmaßen zwischen die Querstreben im unteren Bereich der Gitter gelangen. Beim Aufstehen oder wenn sich die Tiere festgeklemmt haben, kommt es häufig zu schweren Verletzungen der Tiere.

Deshalb sind in einschlägigen Empfehlungen für die Pferdehaltung, wie sie z.B. von der Reiterlichen Vereinigung (FN) herausgegeben werden, Gitterabstände zwischen 5 und 30 cm als nicht pferdekonform und somit nicht zur Pferdehaltung geeignet aufgelistet.

Der vorliegenden Erfindung liegt die Aufgabe zugrunde, die Nachteile des Stands der Technik abzumildern oder ganz zu beheben. Konkret liegt der vorliegenden Erfindung die Aufgabe zugrunde, ein Panel bereitzustellen, welches für die sichere Eingrenzung und Unterbringung von Pferden geeignet ist.

Diese Aufgabe wird durch ein Panel gemäß Anspruch 1 gelöst. Weitere vorteilhafte Weiterbildungen der Erfindung sind Gegenstand der Unteransprüche.

Ein erfindungsgemäßes Panel für Pferde weist einen vorzugsweise rechteckigen Rahmen und eine Mehrzahl von in dem Rahmen angeordneten Querstreben auf, wobei in einem ersten Bereich des Panels der Abstand zwischen den einzelnen Querstreben maximal 5 cm beträgt und in einem zweiten Bereich des Panels der Abstand zwischen den einzelnen Querstreben im Bereich zwischen ca. 30 cm und ca. 80 cm liegt.

Ein erfindungsgemäßes Panel weist zudem ein Schiebetor auf, was das Panel vielseitig einsetzbar macht. Zudem werden Verletzungen der Tiere erfindungsgemäß auch im Bereich der Tür bzw. des Tores vermieden.

Das Schiebetor ermöglicht eine bequeme Anwendung eines erfindungsgemäßen Panels auch bei engen Stallgassen, da kein Verschwenken des Tors zum Öffnen erforderlich ist. Zusätzlich bietet die lichte Struktur des Panels eine leichte Optik sowie optimale Luftzirkulation im Stall. Aus dem Stand der Technik sind Panels nur mit verschwenkbaren Türen bekannt, Schiebetore jedoch nur mit soliden Wänden (beispielsweise bei Pferdeboxen).

Die vorliegende Erfindung bietet nun erstmals die Möglichkeit, die Vorteile eines Schiebetors (einfaches und sicheres Öffnen, weniger Raumerfordernis, Komplette Toröffnung steht dem Tier und Mensch zur Verfügung, daher höhere Sicherheit) mit den Vorteilen einer Panelstruktur (leichter Aufbau, optimale Luftzirkulation, verbesserte Kommunikation der Tiere miteinander) zu kombinieren.

Vorzugsweise sind die Abstände eines erfindungsgemäßen Panels in dem ersten Bereich kleiner als 5 cm und in dem zweiten Bereich größer als 30 cm im geöffneten und geschlossenem Zustand des Schiebetors.

Vorzugsweise weist auch das Schiebetor einen vorzugsweise rechteckigen Torrahmen mit einer Mehrzahl von in dem Torrahmen angeordneten Querstreben auf, wobei in einem ersten Bereich des Schiebetors der Abstand zwischen den einzelnen Querstreben maximal 5 cm beträgt und in einem zweiten Bereich des Schiebetors der Abstand zwischen den einzelnen Querstreben mindestens ca. 30 cm beträgt und vorzugsweise im Bereich zwischen ca. 30 cm und ca. 80 cm liegt.

Der Kern der Erfindung liegt herbei darin, die Abstände der Querstreben sowohl bei dem Panel, als auch bei dessen Schiebetor derart anzupassen, dass eine Verletzungsgefahr der Pferde minimiert wird.

Im unteren Bereich (erster Bereich), vorzugsweise bis auf eine Höhe von ca. 50 cm, betragen die Gitterabstände maximal 5 cm. Hierdurch ist es nicht mehr möglich, dass die Pferde beim Wälzen oder auch anderweitig mit ihren Extremitäten zwischen die Stäbe/ Querstreben gelangen können.

In anderen Worten erstreckt sich der erste Bereich des Panels und / oder Schiebetors vorzugsweise zwischen ca. 30 cm und 80 cm, vorzugsweise zwischen ca. 40 cm und ca. 70 cm, insbesondere zwischen ca. 45 cm und ca. 60 cm, besonders zwischen ca. 45 cm und ca. 55 cm ausgehend von einem ersten Ende des Rahmens / Torrahmens hin zu einem zweiten, dem ersten Ende entgegengesetzten, Ende.

Vorzugsweise liegt in dem ersten Bereich des Panels bzw. Schiebetors der Abstand zwischen den einzelnen Querstreben vorzugsweise zwischen ca. 0,5 cm und 5 cm, vorzugsweise zwischen ca. 1 cm und ca. 4,5 cm, insbesondere zwischen ca. 2 cm und ca. 4 cm oder zwischen ca. 3 cm und ca. 4,5 cm.

Im oberen Bereich (zweiter Bereich) sind die Gitterabstände auf über 30 cm festgelegt. Hierdurch ist es möglich, dass ein Pferd, sollte es zwischen die Rohre kommen, problemlos wieder zurückweichen kann.

In anderen Worten liegt in dem zweiten Bereich des Panels bzw. Schiebetors der Abstand zwischen den einzelnen Querstreben vorzugsweise zwischen ca. 30 cm und 75 cm, vorzugsweise zwischen ca. 35 cm oder ca. 40 cm und ca. 70cm, insbesondere zwischen ca. 40 cm und ca. 55 cm oder zwischen ca. 55 cm und ca. 70 cm.

Erfindungsgemäße Panels können aufgrund der besonderen Anordnung der Querstreben ohne Einschränkungen für die vorrübergehende oder auch längerfristige Unterbringung von Pferden empfohlen werden. Tierhalter, die Boxen für Pferde vermieten, gehen somit haftungsrechtlich kein Risiko mehr ein, da Sie nicht gegen einschlägige Empfehlungen verstoßen.

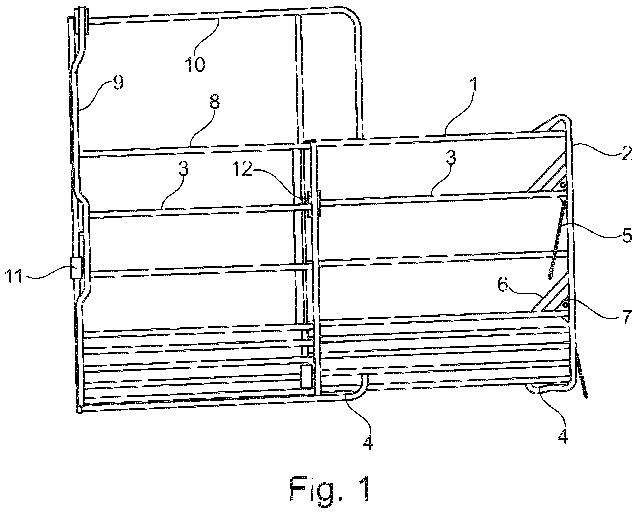

Es hat sich in der Praxis als hilfreich erwiesen, wenn der Abstand zwischen den einzelnen Querstreben in dem ersten Bereich des Schiebetors dem Abstand zwischen den einzelnen Querstreben in dem ersten Bereich des Panels entspricht und / oder der Abstand zwischen den einzelnen Querstreben in dem zweiten Bereich des Schiebetors dem Abstand zwischen den einzelnen Querstreben in dem zweiten Bereich des Panels entspricht. Eine derartige Ausgestaltung ist beispielhaft in Fig. 1 gezeigt.

In anderen Worten sind auf gleicher Höhe bzw. im gleichen Bereich bei dem Schiebetor und dem Panel vorzugsweise dieselben Abstände zwischen den Querstreben vorhanden.

Das Panel, vorzugsweise der Rahmen mit den Querstreben, weist vorzugsweise ein Lager, insbesondere einen Bügel, zum Halten und / oder Führen des Schiebetors auf. Vorzugsweise weist das Schiebetor einen Haltearm auf, welcher dazu ausgelegt ist, das Schiebetor an dem Lager, insbesondere Bügel, vorzugsweise beweglich zu halten. Das Schiebetor ist an dem Lagere vorzugsweise mittels Rollen beweglich gelagert.

Das Schiebetor wird somit vorzugsweise durch einen (vorzugsweise einzigen) mit dem Panel verbundenen Bügel getragen und / oder geführt.

Für ein sicheres Verriegeln des Schiebetors ist das Panel vorzugsweise mit einem Verschließmechanismus zum Verriegeln des Schiebetors ausgestattet, wobei der Verschließmechanismus mindestens einen vorgespannten Riegel, vorzugsweise einen Federriegel, aufweist. Der vorgespannte Riegel weist vorzugsweise eine automatische Einrastfunktion auf.

Zur Führung des Schiebetors weist das Panel vorzugsweise eine mehrfach-Rohrführung für das Schiebetor, insbesondere eine dreifach-Polymer (insbesondere Polyamid)- Rohrführung auf.

Für einen sicheren Stand im Gelände und zum einfachen Bewegen des Schiebetors kann das Panel, insbesondere der Rahmen, und / oder das Schiebetor mindestens ein teilweise oder vollständig kufenförmiges Standelement aufweisen.

Die Toröffnung hat vorzugsweise eine Höhe von 2m bis 3m, vorzugsweise zwischen 2,0 m und 2,50 m, insbesondere zwischen 2,20 m und 2,40 m. Die Durchgangsbreite liegt vorzugsweise zwischen 1,0 m und 1,50 m, insbesondere zwischen 1,10 m und 1,40 m. Dies ermöglicht ein komfortables Passieren des Tors für die Pferde. Weiterhin hat es sich in der Praxis als vorteilhaft herausgestellt, wenn das Panel und / oder das Schiebetor Standelemente aufweist, auf denen das Panel bzw. Schiebetor aufstellbar ist, und der erste Bereich näher bei den Standelementen angeordnet ist als der zweite Bereich. In anderen Worten ist der erste Bereich vorzugsweise der untere Bereich des Panels / Schiebetors. Dies ist beispielhaft in Fig. 1 gezeigt.

Vorzugsweise sind die Standelemente derart ausgeführt, dass, wenn das Panel / Schiebetor mittels der Standelemente aufgestellt ist, eine Lücke zwischen der untersten Querstrebe und dem Boden weniger als 5 cm beträgt, sodass keine Gefahr besteht, dass sich ein Pferd mit seinen Extremitäten in der Lücke zwischen Panel und Boden verfängt.

Vorzugsweise sind der Rahmen und die Querstreben aus Metall, insbesondere aus Stahl, gefertigt.

Weiterhin können an einem erfindungsgemäßen Panel und / oder Schiebetor Verbindungselemente, insbesondere in Form von Ketten oder Bügeln vorgesehen sein, mittels welcher das Panel mit anderen Panels lösbar verbindbar ist.

Weiterhin hat es sich als vorteilhaft erwiesen, wenn der Rahmen / Torrahmen und die Querstreben aus vorzugsweise miteinander verschweißten Hohlrohren gefertigt sind. Dies ermöglicht die Fertigung von besonders leichten Panels.

Vorzugsweise kommen warm gewalzte Flachrohre mit einer viereckigen Querschnitts-Grundfläche mit einer Länge von 50mm und einer Breite von 30 mm bei einer Materialstärke von 1,5 mm zum Einsatz.

Ein erfindungsgemäßes Panel kommt beispielsweise bei einem mobilen Paddock zum Einsatz.

Ein erfindungsgemäßes Panel kann aber auch im Rahmen eines fest installierten Stalls, beispielsweise zur Abgrenzung einer Pferdebox zur Stallgasse, eingesetzt werden.

Weitere Vorteile, Merkmale und Effekte der vorliegenden Erfindung ergeben sich aus der nachstehenden Beschreibung eines Ausführungsbeispiels unter Bezugnahme auf die zugehörigen Figuren. Gleiche oder ähnliche Bauteile sind hierbei mit denselben Bezugszeichen bezeichnet. Hierbei zeigt:
Fig. 1 ein Panel mit Schiebetor gemäß der vorliegenden Erfindung;
Fig. 2 ein erfindungsgemäßes Panel mit einer Grundlänge von 3600 cm;
Fig. 3 ein erfindungsgemäßes Panel mit einer Grundlänge von 3000 cm.

Das in Fig. 1 gezeigte erfindungsgemäße Panel 1 weist einen rechteckigen Rahmen 2 und mehrere in dem Rahmen 2 angeordnete Querstreben 3 auf.

Das Panel 1 weist zudem ein Schiebetor mit einem rechteckigen Torrahmen 8 auf, in welchem ebenfalls mehrere Querstreben 3 angeordnet sind.

In einem ersten, unteren Bereich des Panels und des Schiebetors beträgt der Abstand zwischen den einzelnen Querstreben maximal 5 cm, hier beispielsweise 5 cm, und in einem zweiten, oberen Bereich des Panels oder Schiebetors beträgt der Abstand zwischen den einzelnen Querstreben mehr als 30 cm, hier beispielsweise 32 cm.

Die Abstände sind im Bereich des Panels und des Schiebetors gleich gewählt.

Das Schiebetor weist eine Haltearm 9 auf, mittels welchem das Schiebetor bzw. der Torrahmen 8 an einem Bügel 10 gehalten und geführt wird. Der Bügel 10 ist mit dem Rahmen 2 verbunden.

Das Panel weist einen Verschließmechanismus 11 zum Verriegeln des Schiebetors auf. Das Schiebetor bzw. der Torrahmen wird über eine Führung 12 an einer Querstrebe 3 des Panels geführt.

Das Panel bzw. der Torrahmen 8 weist kufenförmige Standelemente bzw. Füße 4 auf, mittels welcher das Panel 1 / Schiebetor auf den Boden gestellt werden kann. Erfindungsgemäß beträgt die Lücke zwischen dem Panel 1 bzw. der untersten Querstrebe 3 und dem Boden weniger als 5 cm, hier beispielsweise 4cm.

Mittels Verbindungselementen, z.B. in Form von Ketten 5, sind einzelne Panels miteinander verbindbar.

Wie in Fig. 1 gezeigt, kann ein erfindungsgemäßes Panel zusätzlich mindestens ein Abschirmungselement 6 aufweisen, welches verhindert, dass sich Tiere an den möglicherweise scharfkantigen Verbindungselementen verletzen.

Gemäß einer Ausführungsform weisen die Panels Ketten 5 und entsprechende Verankerungselemente 7, vorzugsweise in Form von Blechbauteilen oder Dreiecksblechen auf, um einzelne Panels miteinander zu verbinden.

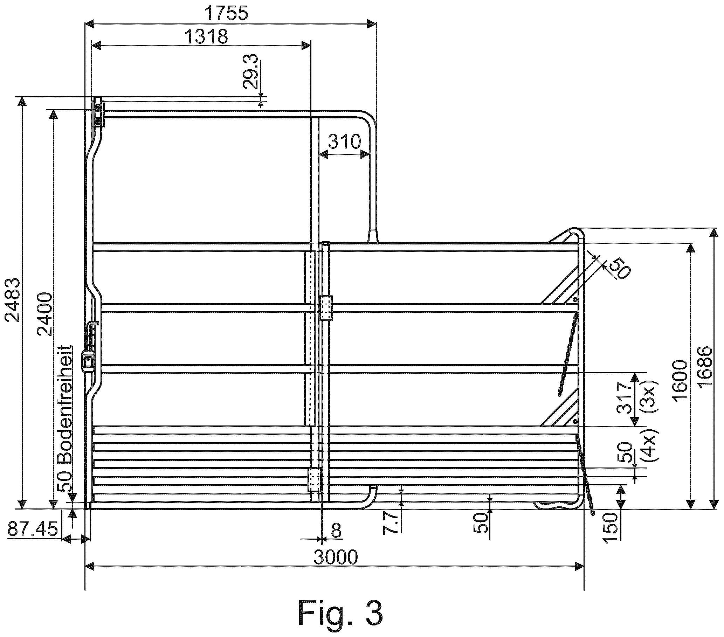

Die Verankerungselemente 7 können sehr scharfkantig sein. Um zu verhindern, dass sich Tiere, die mit ihren Extremitäten zwischen die Querstreben geraten, an den Verankerungselementen 7 verletzten, weist das Panel aus Fig. 3 Abschirmungselemente 6 auf, welche die Verankerungselemente 7 abschirmen und somit die Verletzungsgefahr minimieren.

In der in Fig. 1 gezeigten Ausführungsform sind die Abschirmungselemente 6 als diagonal verlaufende Streben ausgestaltet, welche jeweils parallel zu der die Hypotenuse bildenden Kante der in dieser Ausführungsform als Dreiecksbelche ausgebildeten Verankerungselemente 7 verlaufen.

In der in Fig. 1 gezeigten Ausführungsform sind die Abschirmungselemente 6 nur auf einer Seite (rechts in Fig. 1) des Panels vorgesehen, das Panel kann aber auch beidseitig mit Abschirmungselementen 6 ausgestattet sein, diese können grundsätzlich auch im Bereich des Schiebetors angeordnet sein.

Der Abstand zwischen einem jeden Abschirmungselement 6 und dem zugehörigen Verankerungselement 7 bzw. dessen Kante beträgt vorzugsweise maximal 5 cm und liegt besonders bevorzugt im Bereich zwischen ca. 1cm und ca. 5 cm.

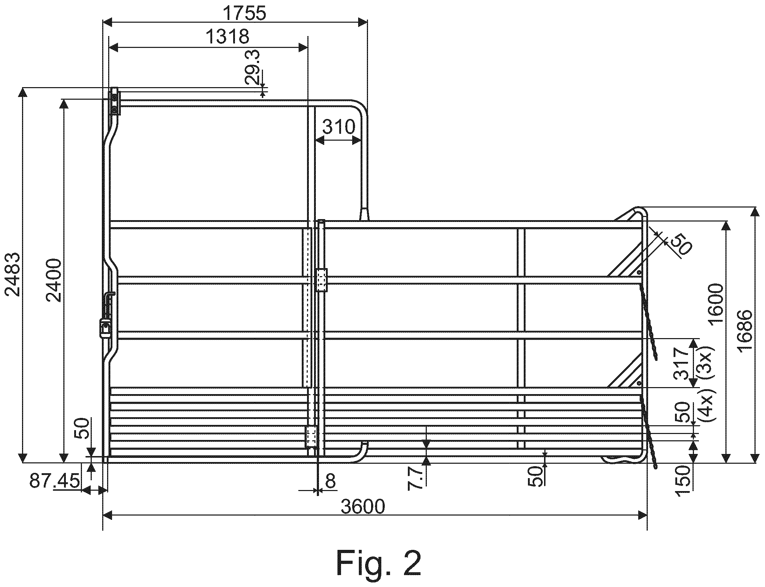

Der Aufbau der Panels der Fig. 2 und 3 entspricht dem Aufbau des Panels in Fig. 1, diese Figuren dienen der Information bezüglich besonders bevorzugter Abmessungen eines erfindungsgemäßen Panels.

## Patentansprüche

1. Panel für Pferde, mit einem vorzugsweise rechteckigen Rahmen und einer Mehrzahl von in dem Rahmen angeordneten Querstreben, **dadurch gekennzeichnet, dass** in einem ersten Bereich des Panels der Abstand zwischen den einzelnen Querstreben maximal 5 cm beträgt und in einem zweiten Bereich des Panels der Abstand zwischen den einzelnen Querstreben mindestens ca. 30 cm beträgt und vorzugsweise im Bereich zwischen ca. 30 cm und ca. 80 cm liegt und dass das Panel ein Schiebetor aufweist.

2. Panel gemäß Anspruch 1, **dadurch gekennzeichnet, dass** das Schiebetor einen vorzugsweise rechteckigen Torrahmen mit einer Mehrzahl von in dem Torrahmen angeordneten Querstreben aufweist, wobei in einem ersten Bereich des Schiebetors der Abstand zwischen den einzelnen Querstreben maximal 5 cm beträgt und in einem zweiten Bereich des Schiebetors der Abstand zwischen den einzelnen Querstreben mindestens ca. 30 cm beträgt und vorzugsweise im Bereich zwischen ca. 30 cm und ca. 80 cm liegt.

3. Panel gemäß Anspruch 2, **dadurch gekennzeichnet, dass** der Abstand zwischen den einzelnen Querstreben in dem ersten Bereich des Schiebetors dem Abstand zwischen den einzelnen Querstreben in dem ersten Bereich des Panels entspricht und / oder der Abstand zwischen den einzelnen Querstreben in dem zweiten Bereich des Schiebetors dem Abstand zwischen den einzelnen Querstreben in dem zweiten Bereich des Panels entspricht.

4. Panel gemäß einem der vorhergehenden Ansprüche, **dadurch gekennzeichnet, dass** das Panel ein Lager, insbesondere einen Bügel, zum Halten und / oder Führen des Schiebetors aufweist und / oder das Schiebetor einen Haltearm aufweist, welcher dazu ausgelegt ist, das Schiebetor an dem Lager zu halten, wobei das Schiebetor vorzugsweise an dem Lager beweglich, vorzugsweise mittels Rollen, gelagert ist.

5. Panel gemäß einem der vorhergehenden Ansprüche, **dadurch gekennzeichnet, dass** das Schiebetor durch einen mit dem Panel verbundenen Bügel getragen und / oder geführt wird.

6. Panel gemäß einem der vorhergehenden Ansprüche, weiterhin mit einem Verschließmechanismus zum Verriegeln des Schiebetors, wobei der Verschließmechanismus mindestens einen vorgespannten Riegel, vorzugsweise einen Federriegel, aufweist.

7. Panel gemäß einem der vorhergehenden Ansprüche, **dadurch gekennzeichnet, dass** das Panel, insbesondere der Rahmen, und / oder das Schiebetor mindestens ein teilweise oder vollständig kufenförmiges Standelement aufweist.

8. Panel gemäß einem der vorhergehenden Ansprüche, **dadurch gekennzeichnet, dass** in dem ersten Bereich des Panels und / oder des Schiebetors der Abstand zwischen den einzelnen Querstreben zwischen ca. 0,5 cm und 5 cm, vorzugsweise zwischen ca. 1 cm und ca. 4,5 cm, insbesondere zwischen ca. 2 cm und ca. 4 cm oder zwischen ca. 3 cm und ca. 4,5 cm liegt.

9. Panel gemäß einem der vorhergehenden Ansprüche, **dadurch gekennzeichnet, dass** in dem zweiten Bereich des Panels und / oder Schiebetors der Abstand zwischen den einzelnen Querstreben zwischen ca. 30 cm und 75 cm, vorzugsweise zwischen ca. 40 cm und ca. 70cm, insbesondere zwischen ca. 40 cm und ca. 55 cm oder zwischen ca. 55 cm und ca. 70 cm liegt.

10. Panel gemäß einem der vorhergehenden Ansprüche, **dadurch gekennzeichnet, dass** das Panel und / oder das Schiebetor mindestens ein Standelement aufweist, auf dem das Panel bzw. das Schiebetor aufstellbar ist, und der erste Bereich des Panels und / oder Schiebetors näher bei dem Standelement angeordnet ist als der zweite Bereich.

11. Panel nach Anspruch 10, **dadurch gekennzeichnet, dass** die Standelemente derart ausgeführt sind, dass, wenn das Panel und / oder das Schiebetor mittels der Standelemente aufgestellt ist, eine Lücke zwischen der untersten Querstrebe und dem Boden 5cm oder weniger als 5 cm beträgt.

12. Panel nach einem der vorhergehenden Ansprüche, **dadurch gekennzeichnet, dass** der Rahmen und dessen Querstreben sowie der Torrahmen und dessen Querstreben aus Metall, insbesondere aus Stahl, gefertigt sind.

13. Panel nach einem der vorhergehenden Ansprüche, **dadurch gekennzeichnet, dass** weiterhin Verbindungselemente vorgesehen sind, mittels welcher das Panel mit anderen Panels lösbar verbindbar ist.

14. Panel nach einem der vorhergehenden Ansprüche, **dadurch gekennzeichnet, dass** der Rahmen und dessen Querstreben sowie der Torrahmen und dessen Querstreben aus vorzugsweise miteinander verschweißten Hohlrohren, insbesondere aus warm gewalzten Flachrohren, gefertigt sind.

15. Panel nach einem der vorhergehenden Ansprüche, **dadurch gekennzeichnet, dass** sich der erste Bereich des Rahmens und / oder Torrahmens zwischen ca. 30 cm und 80 cm, vorzugsweise zwischen ca. 40 cm und ca. 70 cm, insbesondere zwischen ca. 45 cm und ca. 60 cm, besonders zwischen ca. 45 cm und ca. 55 cm ausgehend von einem ersten Ende des Rahmens oder Torrahmens hin zu einem zweiten, dem ersten Ende entgegengesetzten, Ende erstreckt.

16. Panel nach einem der vorhergehenden Ansprüche, **dadurch gekennzeichnet, dass** weiterhin Abschirmelemente vorgesehen sind, mittels welcher Verbindungselemente zum Verbinden mehrerer Panels miteinander und / oder den Verbindungselementen zugehörige Verankerungselemente abgeschirmt werden, wobei vorzugsweise ein Abstand zwischen einem jeden Abschirmelement und / oder dem zugehörigen Verbindungselement oder Verankerungselement weniger als 5 cm beträgt.

17. Mobiler Paddock mit mindestens einem Panel gemäß den vorhergehenden Ansprüchen.

18. Pferdebox mit mindestens einem Panel gemäß den vorhergehenden Ansprüchen 1 bis 16.
